# FASCICULE DE BREVET EUROPEEN

(11) **EP 2 271 518 B1**
(45) Date de publication et mention de la délivrance du brevet: **05.09.2018**
(21) Numéro de dépôt: 09750036.7
(22) Date de dépôt: 05.05.2009
(51) Int. Cl.: B60Q 3/54, B60K 37/00

(54) **PANNEAU DE GARNISSAGE DE VÉHICULE AUTOMOBILE COMPRENANT UN PICTOGRAMME RÉTROÉCLAIRÉ DE FAÇON NETTE.**
MOTORFAHRZEUGVERKLEIDUNGSPLATTE MIT EINEM SCHARF RÜCKBELEUCHTETEN PIKTOGRAMM
MOTOR-VEHICLE LINING PANEL COMPRISING A SHARPLY BACK-LIT PICTOGRAM

(30) Priorité: 06.05.2008 FR 0853007
(43) Date de publication de la demande: 12.01.2011
(73) Titulaire: Faurecia Intérieur Industrie, 92000 Nanterre (FR)
(72) Inventeur: BEAU, Godefroy, F-92250 La Garenne Colombes (FR); OEUVRARD, Jean-François, F-95300 Cergy Pontoise (FR); GUERREIRO, Pierre, F-95600 Eaubonne (FR)
(74) Mandataire: Lavoix
(86) Numéro de dépôt international: PCT/FR2009/050821
(87) Numéro de publication internationale: WO 2009/141555

(56) Documents cités:
- EP-A- 1 495 911
- DE-U1- 29 808 949
- FR-A- 2 824 510
- FR-A- 2 877 896
- JP-A- 2001 191 845
- US-A1- 2002 101 738

## Description

La présente invention concerne un panneau de garnissage pour véhicule automobile, du type comprenant au moins une zone formant pictogramme, ledit pictogramme étant illuminé au moyen d'une source de lumière disposée sous le panneau de garnissage, le panneau de garnissage comprenant une peau translucide formant la surface externe du panneau de garnissage et une couche de support disposée contre la peau entre la source de lumière et au moins la zone formant pictogramme.

L'invention concerne également un véhicule automobile comprenant un tel panneau de garnissage.

Par pictogramme, nous entendons tout dessin figuratif ou symbolique utilisé à des fins de communication, y compris des signes alphanumériques.

Dans les panneaux connus du type décrit ci-dessus, la source de lumière est disposée sous la couche de support. La lumière traverse donc la couche de support puis la peau translucide où elle est diffusée selon la forme du pictogramme délimitée par un masque. Le document FR-2 824 510 décrit par exemple un panneau de garnissage de ce type.

Cependant, le passage de la lumière dans la couche de support entraîne également une diffusion de la lumière à l'intérieur de celle-ci en raison de la cristallinité ou de la charge du matériau polymère formant la couche de support. Ceci entraîne une diffusion de la lumière à l'extérieur de la zone formant pictogramme. L'image du pictogramme devient donc imprécise et l'effet esthétique obtenu n'est pas satisfaisant.

L'un des buts de l'invention est de pallier cet inconvénient en proposant un panneau de garnissage du type précité dans lequel l'éclairage du pictogramme est réalisé de façon précise et l'image obtenue est nette et ressort clairement par rapport à la zone l'entourant.

A cet effet, l'invention concerne un panneau de garnissage du type précité, dans lequel la couche de support présente au moins une première épaisseur autour de la zone formant pictogramme et au moins une deuxième épaisseur en regard de la zone formant pictogramme, la deuxième épaisseur étant inférieure à la première épaisseur.

L'épaisseur réduite de la couche de support en regard de la zone de pictogramme permet de raccourcir le trajet des rayons lumineux dans la couche de support, ce qui limite fortement leur diffusion dans cette couche. On obtient ainsi un pictogramme éclairé de façon nette et ressortant clairement par rapport à la zone l'entourant.

Selon d'autres caractéristiques du panneau de garnissage :
- la couche de support est rigide ;
- la transition entre la première épaisseur et la deuxième épaisseur se fait selon une pente de transition sensiblement continue, de sorte à réduire l'épaisseur de façon continue entre la première et la deuxième épaisseur ;
- la pente de transition est inférieure ou égale à 10% ;
- le panneau comprend un masque comprenant au moins une ouverture de la forme du pictogramme, ledit masque laissant passer la lumière à travers l'ouverture et bloquant celle-ci autour de l'ouverture, ledit masque étant disposé dans le trajet de passage de la lumière entre la source de lumière et la peau translucide ;
- le masque est disposé entre la peau translucide et la couche de support ou entre la couche de support et la source de lumière ;
- le masque est imprimé sur la surface interne de la peau translucide ou sur la surface supérieure ou sur la surface inférieure de la couche de support ;
- le masque est un élément indépendant ;
- la couche de support est réalisée en un matériau polymère chargé en verre ;
- la première épaisseur est sensiblement comprise entre 2,5 mm et 3 mm et la seconde épaisseur est sensiblement comprise entre 1 mm et 2 mm ; et
- la couche de support comprend des moyens de fixation d'un boîtier, la source de lumière étant disposée dans ledit boîtier.

L'invention concerne également un véhicule automobile comprenant un panneau de garnissage tel que décrit ci-dessus, ledit panneau étant appliqué contre au moins une partie de l'habitacle dudit véhicule automobile.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'une partie d'un panneau de garnissage selon l'invention,
- la Fig. 2 est une représentation schématique de dessus de la peau montrant la zone formant pictogramme lorsqu'elle est éclairée.

Dans la description, on entend par « externe » ce qui est visible depuis l'habitacle du véhicule automobile et par « interne » ce qui n'est pas visible. Les termes « supérieur » et « inférieur » sont définis par rapport à une direction partant de la paroi de l'habitacle et allant vers l'intérieur de l'habitacle.

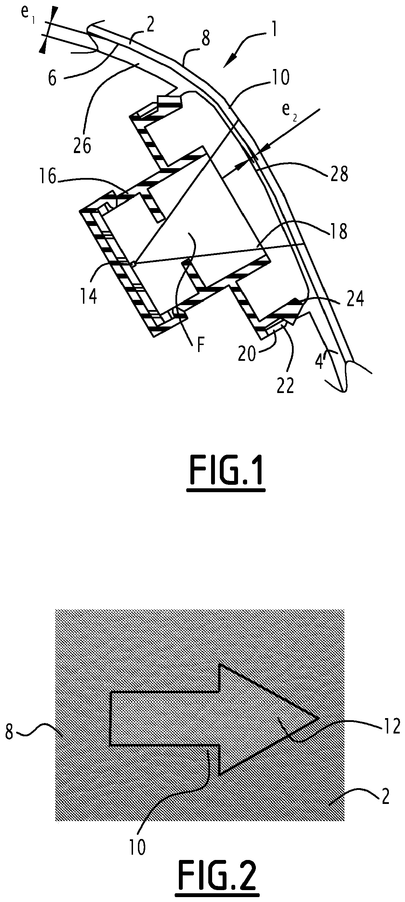

En référence à la Fig. 1, on décrit un panneau de garnissage 1 comprenant une peau translucide 2 et une couche de support 4 disposée contre la surface interne 6 de la peau 2.

La couche de support 4 est rigide. Par rigide, on entend une couche de support 4 réalisée dans un matériau ne s'écrasant sensiblement pas sous l'effet d'une pression, à la différence d'une mousse par exemple qui est un matériau souple. Dans une mousse, la lumière est diffusée par la présence de bulles d'air dans le matériau, tandis que le matériau rigide de la couche de support 4, le trajet de la lumière n'est pas perturbé par la présence de bulles d'air. La couche de support est par exemple réalisée en un matériau polymère translucide chargé en verre et adhérant à la peau translucide 2, ladite couche de support étant par exemple surmoulée directement sur la peau 2. Cet ensemble peut être conformé de la façon souhaitée pour s'adapter au garnissage d'un véhicule automobile. La surface externe 8 formée par la peau 2 est par exemple sensiblement plane ou présente des zones en saillie ou en creux, par exemple pour signaler la présence de boutons de commande de fonctions du véhicule sous l'ensemble peau 2 / couche de support 4.

Au moins une zone 10 du panneau de garnissage 1 comprend un pictogramme 12 rétroéclairé. Par rétroéclairé, on entend qu'une source de lumière 14 est disposée sous le panneau de garnissage 1 et émet de la lumière selon un faisceau F qui est diffusé dans la peau translucide 2 dans la zone 10.

De façon connue, la source de lumière 14 est disposée dans un boîtier 16, appelé « boîte à lumière », comprenant une ouverture supérieure 18 recouverte par le panneau de garnissage 1. La source de lumière 14 est par exemple une diode électroluminescente. Selon le mode de réalisation représenté sur la Fig. 1, le boîtier 16 est fixé à la couche de support 4 par des moyens de fixation 20 s'étendant sous la couche de support 4. Les moyens de fixation 20 comprennent par exemple des pattes 22 s'étendant à partir de la surface interne de la couche de support 4 et comprenant des ouvertures de réception de saillies de fixation 24 prévues sur le boîtier 16.

Selon un autre mode de réalisation, le boîtier 16 est fixé à un support s'étendant sous le panneau de garnissage.

La couche de support 4 présente une première épaisseur e₁ dans une zone 26 qui s'étend autour de la zone formant pictogramme 10. Dans une zone 28 qui s'étend en regard de la zone formant pictogramme 10, la couche de support 4 présente une deuxième épaisseur e₂, inférieure à e₁. Selon un mode de réalisation, la première épaisseur e₁ est sensiblement comprise entre 2,5 mm et 3 mm et la seconde épaisseur e₂ est sensiblement comprise entre 1 mm et 2 mm, de préférence entre 1,5 mm et 2 mm, et est par exemple égale à 1,7 mm.

La zone 28 d'épaisseur e₂ réduite permet de réduire le chemin parcouru par la lumière du faisceau F dans la couche de support 4. Une telle réduction de la distance permet de réduire la diffusion de la lumière à l'intérieur de la couche de support 4 et de limiter l'influence de la cristallinité ou de la charge de la couche de support 4 sur le trajet de la lumière.

Ainsi, la lumière arrive dans la peau 2 sans être diffusée dans la couche de support, ce qui permet d'obtenir un pictogramme 12 clairement défini par rapport au reste de la peau, comme représenté sur la Fig. 2. La lumière est diffusée majoritairement dans la peau 2.

Selon le mode de réalisation représenté sur la Fig. 1, la transition entre la zone 26 d'épaisseur e₁ et la zone 28 d'épaisseur e₂ se fait selon une pente de transition sensiblement continue, de sorte à réduire l'épaisseur de façon continue entre la première et la deuxième épaisseur. La pente de transition est par exemple inférieure ou égale à 10%. Une telle pente permet de masquer la transition entre la zone 26 et la zone 28 depuis l'extérieur et de conserver l'aspect uniforme de la peau, ce qui améliore l'esthétique du panneau de garnissage 1. Cette pente permet également d'éviter les phénomènes de retassure lors de la réalisation du panneau de garnissage 1. La pente de transition et la zone 28 d'épaisseur réduite sont réalisées directement dans l'outil de fabrication de la couche de support 4. Cet outil est par exemple un moule. Ainsi, la zone 28 d'épaisseur réduite est particulièrement simple à réaliser et le panneau de garnissage 1 est peu coûteux à produire.

La zone 10 peut être uniformément éclairée ou seulement partiellement de sorte à éclairer une forme particulière de pictogramme 12, comme représenté sur la Fig. 2. Cette forme est par exemple réalisée au moyen d'un masque (non représenté) comprenant au moins une ouverture de la forme du pictogramme 12. Ce masque laisse passer la lumière à travers son ouverture et bloque celle-ci autour de l'ouverture. Le masque est disposé dans le trajet de passage de la lumière entre la source de lumière 14 et la peau translucide 2.

Le masque est un élément rapporté ou est imprimé directement sur un élément du panneau de garnissage 1, par exemple par des techniques de tampographie, d'héliographie, d'impression ou de marquage à chaud.

Selon divers modes de réalisation, dans le cas d'un masque imprimé, le masque est imprimé sur la face inférieure de la peau 2 ou sur la face inférieure ou la face supérieure de la couche de support 4.

Dans le cas d'un élément rapporté, le masque est disposé entre la peau 2 et la couche de support 4 ou entre la couche de support 4 et la source de lumière 14, par exemple en recouvrant l'ouverture 18 du boîtier 16.

Afin de conférer un aspect ou une couleur particuliers à la peau 2, celle-ci peut être grainée et la couche de support 4 peut être colorée. Afin d'éviter que la lumière passant de l'extérieur vers l'intérieur du panneau de garnissage ne soit réfléchie par la boîte à lumière lorsque le pictogramme n'est pas éclairé, ce qui modifierai l'aspect de la zone 10 par rapport au reste de la peau, le boîtier 16 est réalisé de sorte à absorber la lumière, par exemple en utilisant un matériau noir. Ainsi, seule la lumière provenant de la source de lumière 14 passe par la couche 4 et par la peau 2.

Le panneau de garnissage décrit ci-dessus permet d'obtenir un pictogramme 12 éclairé de façon nette et sans débordement autour du pictogramme du fait du faible trajet parcouru par la lumière dans la couche de support 4. De plus, la peau présente un aspect uniforme lorsque le pictogramme n'est pas éclairé.

Le panneau de garnissage décrit ci-dessus peut être particulièrement utilisé en tant que planche de bord de véhicule automobile ou pour garnir les portes ou le plafond du véhicule.

## Revendications

1. Panneau de garnissage (1) pour véhicule automobile, du type comprenant au moins une zone (10) formant pictogramme (12), ledit pictogramme (12) étant illuminé au moyen d'une source de lumière (14) disposée sous le panneau de garnissage (1), le panneau de garnissage (1) comprenant une peau translucide (2) formant la surface externe (8) du panneau de garnissage (1) et une couche de support (4) disposée contre la peau (2) entre la source de lumière (14) et au moins la zone (10) formant pictogramme (12), la couche de support (4) présentant au moins une première épaisseur (e₁) autour de la zone (10) formant pictogramme (12) et au moins une deuxième épaisseur (e₂) en regard de la zone (10) formant pictogramme (12), la deuxième épaisseur (e₂) étant inférieure à la première épaisseur (e₁), **caractérisé en ce que** la couche de support (4) est rigide, réalisée dans un matériau ne s'écrasant sensiblement pas sous l'effet d'une pression.

2. Panneau de garnissage selon la revendication 1, **caractérisé en ce que** la transition entre la première épaisseur (e₁) et la deuxième épaisseur (e₂) se fait selon une pente de transition sensiblement continue, de sorte à réduire l'épaisseur de façon continue entre la première et la deuxième épaisseur.

3. Panneau de garnissage selon la revendication 2, **caractérisé en ce que** la pente de transition est inférieure ou égale à 10%.

4. Panneau de garnissage selon l'une quelconque des revendications 1 à 3, **caractérisé en ce qu'**il comprend un masque comprenant au moins une ouverture de la forme du pictogramme (12), ledit masque laissant passer la lumière à travers l'ouverture et bloquant celle-ci autour de l'ouverture, ledit masque étant disposé dans le trajet de passage de la lumière entre la source de lumière (14) et la peau translucide (2).

5. Panneau de garnissage selon la revendication 4, **caractérisé en ce que** le masque est disposé entre la peau translucide (2) et la couche de support (4) ou entre la couche de support (4) et la source de lumière (14).

6. Panneau de garnissage selon la revendication 5, **caractérisé en ce que** le masque est imprimé sur la surface interne de la peau translucide (2) ou sur la surface supérieure ou sur la surface inférieure de la couche de support (4).

7. Panneau de garnissage selon la revendication 5, **caractérisé en ce que** le masque est un élément indépendant.

8. Panneau de garnissage selon l'une quelconque des revendications 1 à 7, **caractérisé en ce que** la couche de support (4) est réalisée en un matériau polymère chargé en verre.

9. Panneau de garnissage selon l'une quelconque des revendications 1 à 8, **caractérisé en ce que** la première épaisseur (e₁) est sensiblement comprise entre 2,5 mm et 3 mm et la seconde épaisseur (e₂) est sensiblement comprise entre 1 mm et 2 mm.

10. Panneau de garnissage selon l'une quelconque des revendications 1 à 9, **caractérisé en ce que** la couche de support (4) comprend des moyens de fixation (20) d'un boîtier (16), la source de lumière (14) étant disposée dans ledit boîtier (16).

11. Véhicule automobile, **caractérisé en ce qu'**il comprend un panneau de garnissage (1) selon l'une quelconque des revendications 1 à 10, ledit panneau (1) étant appliqué contre au moins une partie de l'habitacle dudit véhicule automobile.

## Patentansprüche

1. Verkleidungspaneel (1) für ein Kraftfahrzeug, des Typs aufweisend wenigstens einen Bereich (10), der ein Piktogramm (12) bildet, wobei das Piktogramm (12) mittels einer Lichtquelle (14) beleuchtet ist, die unter dem Verkleidungspaneel (1) angeordnet ist, wobei das Verkleidungspaneel (1) aufweist eine transluzente Haut (2), die die äußere Fläche (8) des Verkleidungspaneels (1) bildet, und eine Stützschicht (4), die gegen die Haut (2) angeordnet ist zwischen der Lichtquelle (14) und dem wenigstens einen Bereich (10), der ein Piktogramm (12) bildet, wobei die Stützschicht (4) aufweist wenigstens eine erste Dicke (e₁) um den Bereich (10), der ein Piktogramm (12) bildet, herum und wenigstens eine zweite Dicke (e₂) gegenüber dem Bereich (10), der ein Piktogramm (12) bildet, wobei die zweite Dicke (e₂) kleiner ist als die erste Dicke (e₁), **dadurch gekennzeichnet, dass** die Stützschicht (4) starr ist und aus einem Material realisiert ist, das unter der Einwirkung eines Drucks nicht wesentlich zusammengedrückt wird.

2. Verkleidungspaneel gemäß Anspruch 1, **dadurch gekennzeichnet, dass** der Übergang zwischen der ersten Dicke (e₁) und der zweiten Dicke (e₂) entlang einer im Wesentlichen kontinuierlichen Neigung erfolgt, um die Dicke zwischen der ersten und der zweite Dicke kontinuierlich zu verringern.

3. Verkleidungspaneel gemäß Anspruch 2, **dadurch gekennzeichnet, dass** die Übergang-Neigung kleiner oder gleich 10% ist.

4. Verkleidungspaneel gemäß irgendeinem der Ansprüche 1 bis 3, **dadurch gekennzeichnet, dass** es aufweist eine Maske mit wenigstens einer Öffnung der Form des Piktogramms (12), wobei die Maske das Licht durch die Öffnung hindurch passieren lässt und jenes um die Öffnung herum blockiert, wobei die besagte Maske im Durchgangsweg des Lichts zwischen der Lichtquelle (14) und der transluzenten Haut (2) angeordnet ist.

5. Verkleidungspaneel gemäß Anspruch 4, **dadurch gekennzeichnet, dass** die Maske zwischen der transluzenten Haut (2) und der Stützschicht (4) oder zwischen der Stützschicht (4) und der Lichtquelle (14) angeordnet ist.

6. Verkleidungspaneel gemäß Anspruch 5, **dadurch gekennzeichnet, dass** die Maske auf die innere Fläche der transluzenten Haut (2) oder auf die obere Fläche oder auf die untere Fläche der Stützschicht (4) aufgedruckt ist.

7. Verkleidungspaneel gemäß Anspruch 5, **dadurch gekennzeichnet, dass** die Maske ein unabhängiges Element ist.

8. Verkleidungspaneel gemäß irgendeinem der Ansprüche 1 bis 7, **dadurch gekennzeichnet, dass** die Stützschicht (4) realisiert ist aus einem glashaltigen Polymermaterial.

9. Verkleidungspaneel gemäß irgendeinem der Ansprüche 1 bis 8, **dadurch gekennzeichnet, dass** die erste Dicke (e₁) im Wesentlichen zwischen 2,5mm und 3mm liegt und die zweite Dicke (e₂) im Wesentlichen zwischen 1mm und 2mm liegt.

10. Verkleidungspaneel gemäß irgendeinem der Ansprüche 1 bis 9, **dadurch gekennzeichnet, dass** die Stützschicht (4) Mittel zur Fixierung (20) eines Gehäuses (16) aufweist, wobei die Lichtquelle (14) in dem besagten Gehäuse (16) angeordnet ist.

11. Kraftfahrzeug, **dadurch gekennzeichnet, dass** es ein Verkleidungspaneel (1) gemäß irgendeinem der Ansprüche 1 bis 10 aufweist, wobei das Paneel (1) gegen wenigstens einen Abschnitt der Insassenzelle des besagten Kraftfahrzeugs angewandt ist.

## Claims

1. A trim panel (1) for motor vehicles, of the type comprising at least one zone (10) forming a pictogram (12), said pictogram (12) being illuminated by means of a light source (14) placed under the trim panel (1), the trim panel (1) comprising a translucent skin (2) forming the external surface (8) of the trim panel (1) and a support layer (4) placed against the skin (2) between the light source (14) and at least the zone (10) forming the pictogram (12), the support layer (4) having at least one first thickness (e₁) around the zone (10) forming the pictogram (12) and at least one second thickness (e₂) facing the zone (10) forming the pictogram (12), the second thickness (e₂) being less than the first thickness (e₁), **characterized in that** the support layer (4) is rigid, made of a material that does not crush significantly under the effect of a pressure.

2. The trim panel as claimed in claim 1, **characterized in that** the transition between the first thickness (e₁) and the second thickness (e₂) is made according to a substantially continuous transition slope, so as to reduce the thickness continuously between the first and the second thicknesses.

3. The trim panel as claimed in claim 2, **characterized in that** the transition slope is less than or equal to 10%.

4. The trim panel as claimed in any one of claims 1 to 3, **characterized in that** it comprises a mask comprising at least one opening in the form of the pictogram (12), said mask allowing the light to pass through the opening and blocking said light around the opening, said mask being positioned in the path of the light passing between the light source (14) and the translucent skin (2).

5. The trim panel as claimed in claim 4, **characterized in that** the mask is placed between the translucent skin (2) and the support layer (4) or between the support layer (4) and the light source (14).

6. The trim panel as claimed in claim 5, **characterized in that** the mask is printed on the internal surface of the translucent skin (2) or on the top surface or on the bottom surface of the support layer (4).

7. The trim panel as claimed in claim 5, **characterized in that** the mask is an independent element.

8. The trim panel as claimed in any one of claims 1 to 7, **characterized in that** the support layer (4) is made of a glass-fiber reinforced polymer material.

9. The trim panel as claimed in any one of claims 1 to 8, **characterized in that** the first thickness (e₁) is substantially comprised between 2.5 mm and 3 mm and the second thickness (e₂) is substantially comprised between 1 mm and 2 mm.

10. The trim panel as claimed in any one of claims 1 to 9, **characterized in that** the support layer (4) comprises fixing means (20) for a box (16), the light source (14) being placed in said box (16).

11. A motor vehicle, **characterized in that** it comprises a trim panel (1) as claimed in any one of claims 1 to 10, said panel (1) being applied against at least a portion of the passenger compartment of said motor vehicle.
